# EUROPÄISCHE PATENTANMELDUNG

(11) **EP 1 050 760 A2**
(43) Veröffentlichungstag der Anmeldung: **08.11.2000**
(21) Anmeldenummer: 00109304.6
(22) Anmeldetag: 29.04.2000
(51) Int. Cl.: G01S 13/87, G01S 13/90, G01S 7/00, B64G 1/10

(54) **Satellitensystem**

(30) Priorität: 03.05.1999 DE 19920337
(71) Anmelder: OHB Orbital- und Hydrotechnologie Bremen System-GmbH, 28359 Bremen (DE)
(72) Erfinder: Hofer, Bernd, Dr., 27809 Lemwerder (DE); Ellmers, Frank, 28357 Bremen (DE); Miesner, Thomas, 28215 Bremen (DE); Kesselmann, Michael, Dr., 48720 Rosendahl (DE); Kassebohm, Martin, 28209 Bremen (DE); Tobehn, Carsten, 28195 Bremen (DE); Lübke-Ossenbeck, Bernhard, Dr., 28211 Bremen (DE); Braun, Hans Martin, Dr., 88682 Salem (DE); Schotter, Roland, Dr., 88690 Uhldingen Mühlhofen (DE)
(74) Vertreter: Eisenführ, Speiser & Partner

(57) **Zusammenfassung**

Satellitensystem bestehend aus einem Raumsegment und einem Bodensegment, wobei das Raumsegment mehrere Radar-Satelliten enthält, und wobei das Bodensegment mindestens eine Bodenstation mit Satellitenkontrolleinheit und einer SAR-Prozessoreinheit enthält, wobei jeder Radarsatellit eine Radar-Sendeimpulse abgebende SAR-Impulsquelle, eine die SAR-Sendeimpulse abstrahlende, die Echosignale empfangende SAR-Antenne, eine SAR-Elektronik zur Bearbeitung und Digitalisierung der Echosignale, und einen Bilddatenspeicher zur Speicherung der digitalen Bilddaten enthält. Mehrere dieser Radar-Satelliten sind so auf einer Erdumlaufbahn angeordnet sind, daß 100% aller Szenen, die zwischen dem achtzigsten südlichen Breitengrad und dem achtzigsten nördlichen Breitengrad auf der Erdoberfläche liegen, in weniger als 14 Stunden nach einer Bild-Auftragserteilung an das Satellitensystem im Einsehbereich der Radar-Satelliten liegen und bildlich erfaßt werden können.

## Beschreibung

Die Erfindung betrifft ein Satellitensystem bestehend aus einem Raumsegment und einem Bodensegment, wobei das Raumsegment mehrere Radar-Satelliten enthält, und wobei das Bodensegment mindestens eine Bodenstation mit Satellitenkontrolleinheit und einer SAR-Prozessoreinheit enthält, wobei jeder Radarsatellit eine Radar-Sendeimpulse abgebende SAR-Impulsquelle, eine die SAR-Sendeimpulse abstrahlende, die Echosignale empfangende SAR-Antenne, eine SAR-Elektronik zur Bearbeitung und Digitalisierung der Echosignale, und einen Bilddatenspeicher zur Speicherung der digitalen Bilddaten enthält.

Derartige Satellitensysteme für satellitengestützte Erdbeobachtungen des Synthetik-Apertur-Radar-Verfahrens (SAR) sind bekannt, bei denen das Raumsegment aus einem oder wenigen großen Satelliten hoher oder höchster Komplexität besteht, und bei denen eine entsprechend große SAR-Antenne von beispielsweise 10m x 1m eingesetzt wurde, weil nur bei dieser Antennengröße und bei den gewählten Flughöhen die erforderliche Aufnahmequalität realisiert werden konnte.

Die Flughöhe ihrerseits ist bei den bekannten Systemen sehr groß, um die gewünschten Streifenbreiten der Einsehbereiche am Boden zu verwirklichen.

Aufgrund der hohen Komplexität, insbesondere auch aufgrund der Größe der Satelliten und der erforderlichen SAR-Antennen sind die bekannten Radar-Satellitensysteme außerordentlich teuer. Außerdem müssen bei derartigen bekannten Satellitensystemen die einzelnen Radarsatelliten mit Ersatzsystemteilen versehen werden, um die Verfügbarkeit und Betriebsicherheit auch bei Ausfall einzelner Systeme zu gewährleisten. Dadurch werden die Kosten des Gesamtsystems noch wesentlich erhöht.

Aufgabe der Erfindung ist es daher, ein Satellitensystem der eingangs genannten Art so weiterzubilden, daß eine hohe Auflösung der Bilder bei schneller Bildlieferzeit und eine hohe Betriebssicherheit bei einem insgesamt erheblich reduzierten Systempreis verwirklichbar ist.

Diese Aufgabe wird bei dem Satellitensystem der eingangs genannten Art erfindungsgemäß dadurch gelöst, daß mehrere dieser Radar-Satelliten so auf einer Erdumlaufbahn angeordnet sind, daß 100% aller Szenen, die zwischen dem achtzigsten südlichen Breitengrad und dem achtzigsten nördlichen Breitengrad auf der Erdoberfläche liegen, in weniger als 14 Stunden nach einer Bild-Auftragserteilung an das Satellitensystem im Einsehbereich der Radar-Satelliten liegen und bildlich erfaßt werden können.

Zur Lösung der genannten Aufgabe ist das Satellitensystem der eingangs genannten Art erfindungsgemäß dadurch gekennzeichnet, daß mindestens sechs Radar-Satelliten auf ein und derselben erdnahen Umlaufbahn in einer Höhe zwischen 460 km bis 520 km mit vorgegebenen Phasenwinkel-Differenzen zwischen benachbarten Satelliten positioniert sind.

Die Vorteile der Erfindung liegen insbesondere darin, daß eine Flotte bestehend aus mehreren, beispielsweise mindestens sechs Satelliten auf einer erdnahen Umlaufbahn so positioniert sind, daß die zwischen dem achtzigsten südlichen Breitengrad und dem achtzigsten nördlichen Breitengrad liegenden Szenen alle in einer vorgegebenen Zeit überflogen werden und als Bild erfaßt und auf den Boden zu einer Bodenstation übertragen werden können. Die vergleichsweise niedrige Umlaufbahn hat zur Folge, daß der Einsehbereich der Satelliten entsprechend groß ist. Die Verteilung der Gesamtdatenakquisition und der Gesamtsystemverläßlichkeit auf eine Flotte von sechs oder mehr Satelliten erlaubt eine Systemqualität, die mit einem einzelnen Satelliten, gleich welcher Größe, nicht erreichbar ist. Selbst bei dem Totalausfall eines Satelliten kommt es erfindungsgemäß nur zu einer Degradation des Betriebes, d.h. zu einer Erhöhung der Bildlieferzeit, aber nicht zu einem Totalausfall des Systems. Außerdem ist es erfindungsgemäß möglich, dem Satellitensystem weitere identische Radarsatelliten hinzuzufügen, um die Systemkapazität zu erhöhen und die gewünschte Bildlieferzeit zu verringern. Da die Radar-satelliten, welche im erfindungsgemäßen Satellitensystem eingesetzt werden, im wesentlichen identisch sind, besitzt das erfindungsgemäße System eine hohe Modularität mit entsprechend reduzierten Kosten des Grundsystems bei gleichzeitiger einfacher Aufstockung des Systems.

Gemäß einer bevorzugten Ausführungsform der Erfindung sind die Radarsatelliten in einer Höhe von 490 km ± 25 km positioniert. Dabei besitzt der zweite Radar-Satellit gegenüber dem ersten Radar-Satelliten eine orbitale Phasenwinkel-Differenz von 41° ± 10°, der dritte Radar-Satellit besitzt gegenüber dem zweiten Radar-Satelliten eine orbitale Phasenwinkel-Differenz von ebenfalls 41° ± 10°. Der vierte Radar-Satellit besitzt gegenüber dem dritten Radar-Satelliten eine orbitale Phasenwinkel-Differenz von 140° ± 10°. Der fünfte Radar-Satellit besitzt gegenüber dem vierten Radar-Satelliten eine orbitale Phasenwinkel-Differenz von 41° ± 10°, und der sechste Radar-Satellit besitzt gegenüber dem fünften Radar-Satelliten ebenfalls eine orbitale Phasenwinkel-Differenz von 41° ± 10°. Bei dieser Positionierung auf der Umlaufbahn beträgt folglich die orbitale Phasenwinkel-Differenz vom sechsten Radar-Satelliten zum ersten Radar-Satelliten 56° ± 10°. Diese Positionierung der Radar-Satelliten hat zur Folge, daß bei einem Umlauf am Äquator ein Einsehbereich von etwa 1500 bis 2000 km überdeckt wird. Durch die Bodennähe der Satelliten wird auch mit vergleichsweise kleinen Satelliten und entsprechend kleinen SAR-Antennen eine hohe Bildauflösung in beiden Bodendimensionen über dem gesamten Einsehbereich garantiert.

Gemäß einer bevorzugten Ausführungsform der Erfindung ist die SAR-Antenne des jeweiligen Radar-Satelliten starr an diesem Satelliten befestigt. Eine Ausrichtung und Nachführung der SAR-Antenne auf die jeweilige Szene, die bildlich erfaßt werden soll, erfolgt erfindungsgemäß dadurch, daß die Lage des gesamten Satelliten durch sein Lageregelungssystem entsprechend geändert wird. Separate Einrichtungen zur Ausrichtung der SAR-Antenne werden dadurch an Bord des Satelliten nicht benötigt, der Satellit kann entsprechend kleiner und leichter ausgebildet werden. Erfindungsgemäß erfolgt auch die Datenübertragung der Bilddaten zum Boden unter Benutzung des Reflektors der SAR-Antenne, also unter Verzicht auf eine eigene Downlink-Antenne des Satelliten-Busses. Hierdurch wird Aufwand und Gewicht des Satelliten gegenüber dem Stand der Technik erheblich reduziert. Durch die gemeinsame Nutzung verschiedener Unterfunktionen des Satelliten-Busses und der SAR-Einrichtungen lassen sich die Radar-Satelliten leicht, wendig und kostengünstig herstellen.

Gemäß einer Ausführungsform der Erfindung wird die SAR-Antenne während einer Bildaufnahme - durch das Lageregelungssystem des Satelliten - derart nachgeführt, daß der von der Strahlungskeule der SAR-Antenne beleuchtete Bereich im Zielgebiet stillsteht und die Szene solange beleuchtet, bis die gewünschte Bildqualität erreicht ist. Es handelt sich hierbei um den sogenannten Spotlight-Betrieb, der zur Erreichung einer hohen räumlichen Auflösung in Flugrichtung eingesetzt wird. Bei diesem Spotlight-Mode ist jedoch in den Randzonen die Ausleuchtung, speziell in den diagonal zur Flug- und Querabrichtung liegenden Bereichen der Antennengewinn deutlich niedriger als im Zentrum der Beleuchtung. Dies muß durch eine höhere Sendeleistung kompensiert werden.

Besonders bevorzugt führt das Lageregelungssystem des Satelliten während der Bildaufnahme die SAR-Antenne derart nach, daß der von der Strahlungskeule der SAR-Antenne beleuchtete Bereich mit einer im Vergleich zur Fußpunktgeschwindigkeit des Satelliten reduzierten Geschwindigkeit Vₛₗᵢₚ über die Szene streicht. Der Antennen-Beleuchtungsfleck am Boden kommt also bei dieser Ausführungsform der Erfindung nicht vollständig zum Stillstand, vielmehr wird die Fluggeschwindigkeit nur teilweise kompensiert, so daß bevorzugt die Geschwindigkeit der Antennenkeule am Erdboden kleiner ist als ein Drittel der Fußpunktgeschwindigkeit des Satelliten. Da jede Szene am Boden im Azemutschnitt (Flugrichtung) die volle Antennenkeule durchläuft, läßt sich für diese Richtung das Leistungsdefizit des Spotlight-Modes verhindern. Diese erfindungsgemäße sogenannte Slipping-SAR-Mode benötigt zwar eine etwas längere Betriebszeit pro Szene, da in Flugrichtung hintereinanderliegende Zielbereiche nacheinander und nicht gleichzeitig aufgenommen werden. Durch die Slipping-SAR-Mode läßt sich jedoch die Sendeleistung in vorteilhafter Weise entsprechend reduzieren.

Gemäß einer bevorzugten Ausführungsform der Erfindung werden die von den Radarsatelliten mittels der SAR-Antenne empfangenen Echosignale in der SAR-Elektronik in Echtzeit demoduliert und digitalisiert, anschließend in parallelen Datenströmen in einen Bildspeicher des jeweiligen Satelliten eingegeben, und von dort -ebenfalls über die SAR-Antenne des Radar-Satelliten - zu einem geeigneten Zeitpunkt der Bodenstation übertragen. Jeder Satellit weist dabei einen Bildspeicher mit einer Speicherkapazität auf, die eine begrenzte Anzahl an SAR-Bildern zu speichern gestattet. Der zeitkritische Schreibvorgang in den Bildspeicher erfolgt über parallele Kanäle. Die Datenübertragung zur Bodenstation erfolgt beispielsweise über eine unidirektionale Verbindung im X-Band mit einer Datenrate von beispielsweise 150 Mbit/sec. Die Übertragung von zwei Bildern dauert dann etwa 4 Minuten und kann bei einem einzigen Überflug über die Bodenstation erfolgen. Bei der erfindungsgemäßen Auslegung des Satellitensystems kann der Durchmesser der Bodenempfangsantenne unter 3m liegen, wodurch mobile Bodenstationen ersetzbar sind.

Mit der Übertragung des Bildaufnahmebefehls von der Bodenstation zu dem relevanten Satelliten werden alle notwendigen Prozeduren ebenfalls übertragen, die der Satellit benötigt, um in der Folge autonom die ausgewählte Szene anzufliegen, die Bildaufnahme durchzuführen, anschließend die gespeicherten Bilddaten beim Überfliegen der Bodenstation an diese zu übertragen.

Um jeden einzelnen der Radar-Satelliten während seiner Lebensdauer in einem tolerierbaren Höhenbereich zu halten, verfügt jeder Satellit über ein Orbit-Controlsystem (OCS) mit Schubdüsen, Treibstofftanks und einer entsprechend intelligenten Ansteuerungselektronik. Dadurch läßt sich die Betriebsdauer der Satelliten entsprechend erhöhen.

Bei der Übertragung von sicherheitskritischen Daten ist im Regelfall die Verschlüsselung der Daten erfordert, um nichtberechtigten Personen den Einblick in die aufgenommenen Radarbilder zu verwehren oder zu erschweren. Da die Verschlüsselung der SAR-Bilddaten an Bord eines Satelliten nach den bekannten Verfahren wegen der großen Datenmengen und Datenraten einen erheblichen Aufwand an Datenverarbeitung an Bord erfordert, werden erfindungsgemäß alternative Verfahren zur Verschlüsselung der Bilddaten vorgeschlagen:

Zur Erzeugung eines SAR-Bildes aus den SAR-Rohdaten sind Hilfsdaten wie Pulswiederholfrequenz, Orbithöhe, Blickwinkel, Empfangszeit, Pulsmodulation etc. notwendig, ohne die eine Bilderzeugung nicht möglich ist. Diese Daten werden von der SAR-Elektronik in jeweiligen Radar-Satelliten blockweise in verschlüsselter Form hinzugefügt.

Ein raumgestütztes SAR-Verfahren arbeitet mit Sendeimpulsen, die eine Pulskompression erfahren. Dabei wird der jeweilige Sendeimpuls zeitlich gestreckt und moduliert, um die Sendeimpulsenergie auf einen langen Impuls zu verteilen, um die Pulsspitzenleistung niedrig halten zu können. Die entsprechenden Echoimpulse werden im SAR-Prozessor zeitlich wieder komprimiert, und dadurch wird die gewünschte Zeitauflösung erreicht. Bei bekannten SAR-Systemen wird meist die lineare Frequenzmodulation (Chirp) verwendet. Erfindungsgemäß läßt sich jedoch zur Pulsexpansion/Pulskompression eine beliebige Phasenkodierung verwenden, die dann am Boden bekannt sein muß, um aus den empfangenen SAR-Bilddaten das SAR-Bild am Boden zu erzeugen.

Vorteilhafte Weiterbildungen der Erfindung sind durch die Merkmale der Unteransprüche gekennzeichnet. Im folgenden werden Ausführungsbeispiele der Erfindung anhand der Zeichnungen näher erläutert.

Es zeigen:
- Fig. 1: eine schematische Darstellung der Positionierung der Radar-Satelliten auf eine Erdumlaufbahn;
- Fig. 2: eine schematische Darstellung der Einsehbereiche der Radar-Satelliten;
- Fig. 3: die Einsehbereiche der sechs Radar-Satelliten am Äquator;
- Fig. 4: eine schematische Darstellung der Aufnahme einer Szene durch einen Radar-Satelliten;
- Fig. 5: eine schematische Darstellung eines Lagemanövers eines Radar-Satelliten zur Aufnahme einer Szene; und
- Fig. 6: ein Blockdiagramm eines Radar-Satelliten des Satellitensystems.

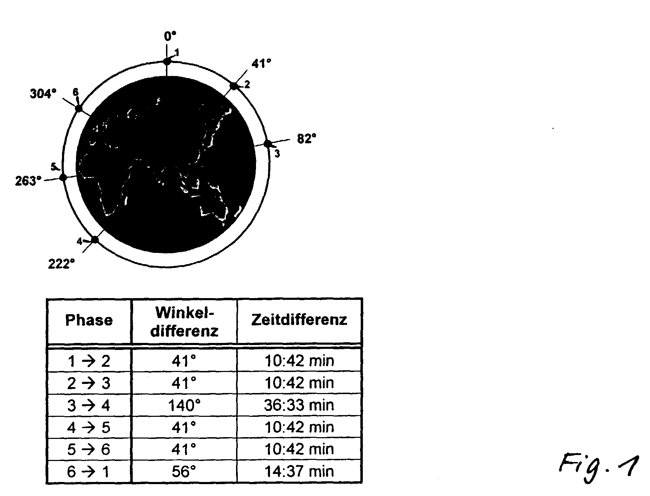

Fig. 1 zeigt eine schematische Darstellung der Positionierung von insgesamt sechs Satelliten eines Satellitensystems auf einer erdnahen Umlaufbahn, die eine Höhe von 490 km ± 25 km besitzt. Der zweite Satellit 2 besitzt eine Phasenwinkel-Differenz zum ersten Satelliten von 41° ± 10°, die einer Zeitdifferenz von 10:42 min entspricht. Der dritte Satellit 3 besitzt gegenüber dem zweiten Satelliten ebenfalls eine Phasenwinkel-Differenz von 41° ± 10°. Der vierte Radar-Satellit 4 besitzt gegenüber dem dritten Satelliten 3 eine Phasenwinkel-Differenz von 140° ± 10°, die einer Zeitdifferenz von 36:33 min entspricht. Der fünfte Satellit besitzt gegenüber dem vierten Satelliten wiederum eine Phasenwinkel-Differenz von 41° ± 10°, der sechste Radar-Satellit besitzt gegenüber dem fünften Satelliten ebenfalls eine Phasenwinkel-Differenz von 41° ± 10°. Die Phasenwinkel-Differenz vom sechsten Satelliten zum ersten Satelliten beträgt daher 56° ± 10°; dies entspricht einer Zeitdifferenz von 14:37 min.

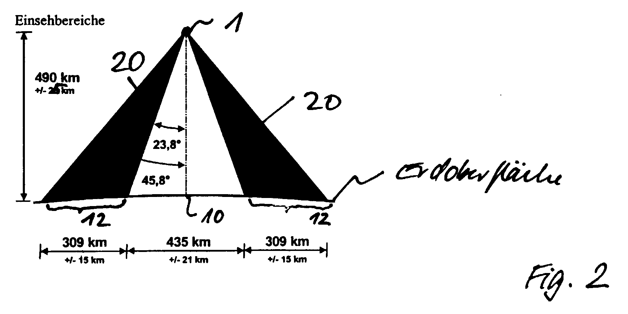

Fig. 2 zeigt - für einen speziellen Satelliten-Typ, der erfindungsgemäß in dem Satellitensystem eingesetzt werden kann - die beiden möglichen Einsehbereiche eines Satelliten, der in Höhe von 490 km ± 25 km um die Erde umläuft. Je nach Lageausrichtung ist der Satellit in der Lage, entweder einen Einsehbereich 12 rechts vom Fußpunkt 10 des Satelliten 1 oder links vom Fußpunkt 10 des Satelliten zu erfassen und mit der Antennenkeule 20 zu erreichen. Die Streifenbreite der beiden möglichen Einsehbereiche beträgt - für die beispielshalber gewählte Bauart des betreffenden Satelliten - 309 km ± 15 km. Der zentrale Bereich unterhalb des Satelliten, also zwischen den beiden Einsehbereichen, besitzt eine Streifenbreite von etwa 435 km ± 21 km.

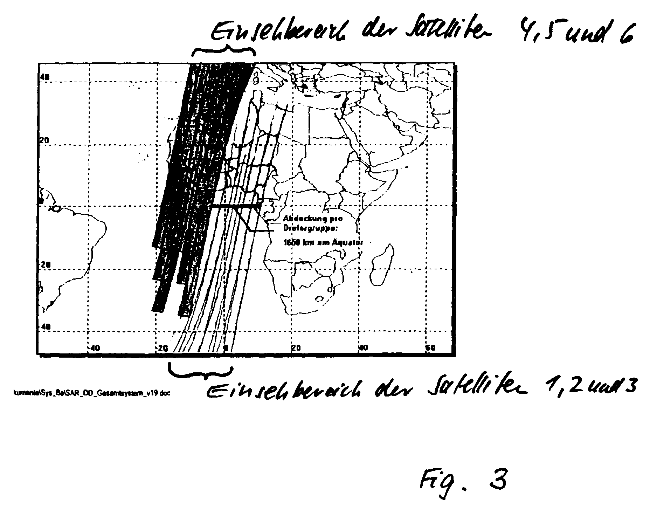

Fig. 3 zeigt die Überlappung der Einsehbereiche der Satelliten 1 bis 6 gemäß Fig. 1, dargestellt am Äquator. Dargestellt ist die Erdabdeckung durch die Einsehbereiche zweier aufeinanderfolgender Dreiergruppen der Satelliten. Der Einsehbereich der aus den Satelliten 4, 5 und 6 gebildeten Dreiergruppe ist dunkelgrau, der Einsehbereich der aus den Satelliten 1, 2 und 3 gebildeten Dreiergruppe hellgrau dargestellt. Pro Dreiergruppe ergibt sich am Äquator eine Abdeckung von etwa 1650 km bei der nominalen Bahnhöhe von etwa 94 km. Die Anordnung der Satelliten auf der Bahnebene ist so gewählt, daß sich u.a. am Äquator Überlappungen zwischen den Einsehbereichen der Dreiergruppen ergeben werden. Die Winkeldifferenz zwischen der ersten Dreiergruppe (Satelliten 1, 2 und 3) und der zweiten Dreiergruppe (Satelliten 4, 5 und 6) beträgt etwa 140°, die Phasenwinkel-Differenz zwischen der zweiten Dreiergruppe (Satelliten 4, 5 und 6) zur ersten Dreiergruppe (Satelliten 1, 2 und 3) beträgt 56°. Entsprechend diesen unterschiedlichen Winkeldifferenzen zwischen den beiden Dreiergruppen ergeben sich unterschiedliche Überlappungen. Beim Übergang vom Satellit 3 zu Satellit 4, d.h. beim Übergang von der ersten Dreiergruppe zur zweiten Dreiergruppe ergibt sich eine Überlappung von ca. 30 km am Äquator, und beim Übergang von Satellit 6 zu Satellit 1, d.h. von der zweiten Dreiergruppe zur ersten Dreiergruppe ergibt sich eine Überlappung von etwa 640 km. Diese Überlappungen sind notwendig, um für alle Breitengrade des Interessengebietes eine Abdeckung zu gewährleisten.

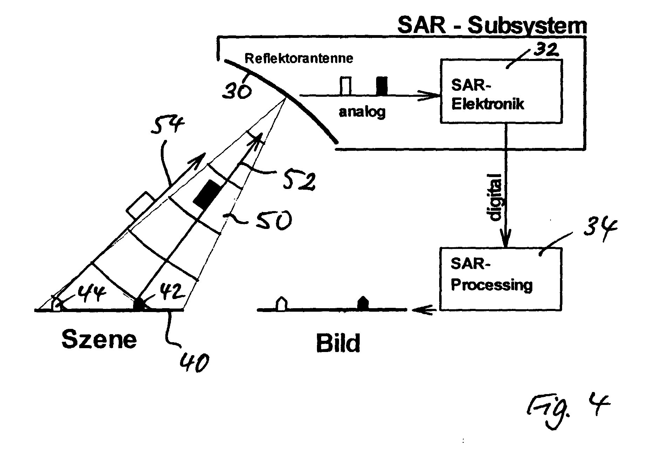

Fig. 4 zeigt eine schematische Darstellung einer Szenenaufnahme. Von der SAR-Antenne 30 werden SAR-Sendeimpulse 50 abgestrahlt und entsprechende Echoimpulse 52 empfangen. Je nach der Laufzeit kehrt dabei der am Objekt 42 reflektierte Echoimpuls 52 um eine vorgegebene Laufzeitdifferenz früher zur SAR-Antenne zurück als das von dem Objekt 44 reflektierte Echosignal 54. Das gesamte Echosignal wird dann der SAR-Elektronik 32 zugeführt, in der das Echosignal in Echtzeit demoduliert und digitalisiert wird und in parallelen Datenströmen in einem Bilddatenspeicher an Bord des Satelliten abgespeichert wird, um anschließend beim Überfliegen einer Bodenstation in digitaler Form von der SAR-Antenne an die Empfangsantenne der Bodenstation abgestrahlt werden. In der Bodenstation wird mittels der SAR-Processing-Einrichtungen das SAR-Bild gewonnen.

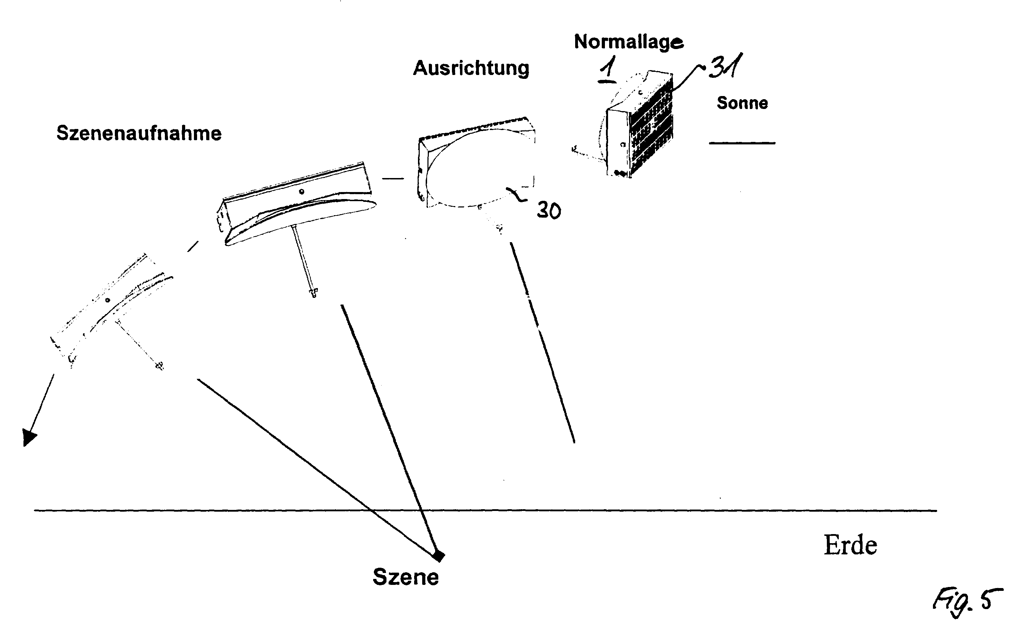

Fig. 5 zeigt ein Lagemanöver eines Radar-Satelliten des Satellitensystems bei einer Szenenaufnahme. Jeder Satellit 1 enthält einen Solargenerator 31 zur Energiegewinnung. Das Lageregelungssystem richtet den Satelliten 1 in seiner Normallage so aus, daß der Solargenerator zur Sonne zeigt. Nach dem Empfang eines Bildaufnahmebefehls wird der Satellit mittels seines Lageregelungssystems so ausgerichtet, daß die Antennenachse der SAR-Antenne 30 mit hoher Genauigkeit auf das Zielgebiet zeigt und für die Dauer der Bildaufnahme mit einer gegenüber der Fußpunktgeschwindigkeit des Satelliten 1 reduzierten Geschwindigkeit vₛₗᵢₚ über die aufzunehmende Szene streicht. Das Lageregelungssystem verwendet zur Erreichung der notwendigen Genauigkeit unter anderem zwei Sternsensoren. Nach der Bildaufnahme wird der Satellit 1 in seine Normallage zurückmanövriert. Bei der Bildabgabe wird dann die Achse der SAR-Antenne für die Dauer der Übertragung der digitalen Bilddaten auf die Empfangsantenne der Bodenstation gerichtet.

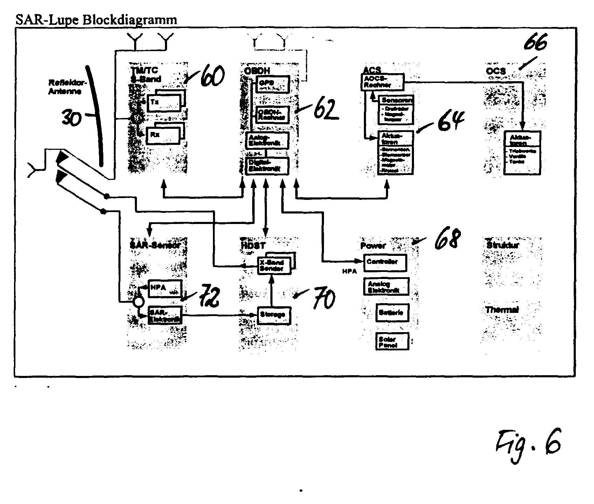

Fig. 6 zeigt ein Blockschaltbild eines einzelnen Radar-Satelliten, der in dem Satellitensystem eingesetzt ist. Dargestellt ist die SAR-Antenne 30, ein erster Block 60, TM/TC genannt, enthält einen Sender Tx und einen Empfänger Rx und ist für die Telemetrie zwischen Bodenstation und Satelliten zur Übertragung der Bildaufnahmebefehle verantwortlich. Ein zweiter Block 62, OBDH genannt, enthält die Onboard-Datenverarbeitung. Ein dritter Block 64, ACS genannt, enthält die Einrichtungen für das Lageregelungssystem des Satelliten. Ein vierter Block 66, OCS genannt, enthält das Orbit-Control-System, welches für die Höhenregelung des Satelliten verantwortlich ist. Ein fünfter Block 68 enthält alle Einrichtungen zur Energieerzeugung und Energieversorgung insbesondere für die elektrischen Einrichtungen an Bord des Satelliten. Ein sechster Block, HDST genannt, enthält einen Bilddatenspeicher zur Speicherung der SAR-Bilddaten sowie einen X-Bandsender zur Übertragung der Bilddaten über die SAR-Antenne 32 zur Bodenstation. Ein siebter Block 72 enthält alle Einrichtungen für den SAR-Sensor, insbesondere eine Impulsquelle HPA zur Erzeugung der SAR-Sendeimpulse, sowie die SAR-Elektronik, welche als Empfangselektronik die Demodulation und Digitalisierung der empfangenen Echosignale durchführt. Der siebte Block, der SAR-Sensor, wird als Nutzlast des Satelliten bezeichnet, die Blöcke 1 bis 6 bilden den sogenannten Satelliten-Bus, der außerdem noch eine Struktur sowie Thermal-Einrichtungen zur Umsetzung eines Thermalkonzeptes, welches der Einhaltung der Temperaturgrenzen für die Komponenten des Satelliten unter Beachtung der elektrischen Verlustleistungen der aktiven Geräte dient.

## Patentansprüche

1. Satellitensystem bestehend aus einem Raumsegment und einem Bodensegment, wobei das Raumsegment mehrere Radar-Satelliten enthält, und wobei das Bodensegment mindestens eine Bodenstation mit Satellitenkontrolleinheit und einer SAR-Prozessoreinheit enthält, wobei jeder Radarsatellit eine Radar-Sendeimpulse abgebende SAR-Impulsquelle, eine die SAR-Sendeimpulse abstrahlende, die Echosignale empfangende SAR-Antenne, eine SAR-Elektronik zur Bearbeitung und Digitalisierung der Echosignale, und einen Bilddatenspeicher zur Speicherung der digitalen Bilddaten enthält,
dadurch gekennzeichnet, daß mehrere dieser Radar-Satelliten so auf einer Erdumlaufbahn angeordnet sind, daß 100% aller Szenen, die zwischen dem achtzigsten südlichen Breitengrad und dem achtzigsten nördlichen Breitengrad auf der Erdoberfläche liegen, in weniger als 14 Stunden nach einer Bild-Auftragserteilung an das Satellitensystem im Einsehbereich der Radar-Satelliten liegen und bildlich erfaßt werden können.

2. Satellitensystem bestehend aus einem Raumsegment und einem Bodensegment, wobei das Raumsegment mehrere Radar-Satelliten enthält, und wobei das Bodensegment mindestens eine Bodenstation mit Satellitenkontrolleinheit und einer SAR-Prozessoreinheit enthält, wobei jeder Radarsatellit eine Radar-Sendeimpulse abgebende SAR-Impulsquelle, eine die SAR-Sendeimpulse abstrahlende, die Echosignale empfangende SAR-Antenne, eine SAR-Elektronik zur Bearbeitung und Digitalisierung der Echosignale, und einen Bilddatenspeicher zur Speicherung der digitalen Bilddaten enthält, insbesondere nach Anspruch 1,
dadurch gekennzeichnet, daß mindestens sechs Radar-Satelliten auf ein und derselben erdnahen Umlaufbahn in einer Höhe zwischen 460 km bis 520 km mit vorgegebenen Phasenwinkel-Differenzen zwischen benachbarten Satelliten positioniert sind.

3. Satellitensystem nach Anspruch 2,
dadurch gekennzeichnet, daß die Radar-Satelliten in einer Höhe zwischen 475 km bis 505 km mit vorgegebenen Phasenwinkel-Differenzen zwischen benachbarten Satelliten positioniert sind.

4. Satellitensystem nach einem der vorstehenden Ansprüche,
dadurch gekennzeichnet, daß ein erster Radar-Satellit bei einem beliebigen orbitalen Phasenwinkel positioniert ist, daß der zweite Radar-Satellit mit einer orbitalen Phasenwinkel-Differenz von 41° ± 10° zum ersten Radar-Satelliten auf der Umlaufbahn positioniert ist, daß ein dritter Radar-Satellit mit einer orbitalen Phasenwinkel-Differenz von 41° ± 10° zum zweiten Radar-Satelliten auf der Umlaufbahn positioniert ist, daß ein vierter Radar-Satellit mit einer orbitalen Phasenwinkel-Differenz von 140° ± 10° zum dritten Radar-Satelliten auf der Umlaufbahn positioniert ist, daß ein fünfter Radar-Satellit mit einer orbitalen Phasenwinkel-Differenz von 41° ± 10° zum vierten Radar-Satelliten auf der Umlaufbahn positioniert ist, und daß ein sechster Radar-Satellit mit einer orbitalen Phasenwinkel-Differenz von 41° ± 10° zum fünften Radar-Satelliten auf der Umlaufbahn positioniert ist.

5. Satellitensystem nach einem der vorstehenden Ansprüche,
dadurch gekennzeichnet, daß die Radar-Satelliten alle identisch ausgebildet sind.

6. Satellitensystem nach einem der vorstehenden Ansprüche,
dadurch gekennzeichnet, daß die SAR-Antenne starr an dem Radar-Satelliten befestigt ist und von dem Lageregelungssystem des Satelliten mittels einer Lageänderung des Satelliten während einer Bildaufnahme auf die jeweilige Szene ausgerichtet ist.

7. Satellitensystem nach einem der vorstehenden Ansprüche,
dadurch gekennzeichnet, daß das Lageregelungssystem während der Bildaufnahme die SAR-Antenne derart nachführt, daß die von der Strahlungskeule der SAR-Antenne beleuchtete Szene im Zielgebiet stillsteht.

8. Satellitensystem nach Anspruch 6,
dadurch gekennzeichnet, daß das Lageregelungssystem des Satelliten während der Bildaufnahme die SAR-Antenne derart nachführt, daß der von der Strahlungskeule der SAR-Antenne beleuchtete Bereich mit einer im Vergleich zur Fußpunktgeschwindigkeit des Satelliten reduzierten Geschwindigkeit vₛₗᵢₚ über die Szene streicht.

9. Satellitensystem nach Anspruch 8,
dadurch gekennzeichnet, daß die reduzierte Geschwindigkeit vₛₗᵢₚ, kleiner ist als ein Drittel der Fußpunktgeschwindigkeit des Satelliten.

10. Satellitensystem nach einem der vorstehenden Ansprüche,
dadurch gekennzeichnet, daß die von den Satelliten empfangenen Echosignale in der SAR-Elektronik in Echtzeit demoduliert und digitalisiert werden und in parallelen Datenströmen in einen Bilddatenspeicher des Satelliten gespeichert werden.

11. Satellitensystem nach einem der vorstehenden Ansprüche,
dadurch gekennzeichnet, daß die SAR-Elektronik Kodiereinrichtungen enthält, weiche mittels einer speziellen Pulskompression die SAR-Sendesignale bei ihrer Erzeugung geheim verschlüsseln.

12. Satellitensystem nach einem der vorstehenden Ansprüche,
dadurch gekennzeichnet, daß mit der Übertragung des Bildaufnahmebefehls von der Bodenstation zum Satelliten alle notwendigen Prozeduren auf den Satelliten übertragen werden, die der Satellit benötigt, um in der Folge autonom die ausgewählte Szene anzufliegen, die Bildaufnahme durchzuführen, die Bodenstation wieder anzufliegen und die gespeicherten Bilddaten zu der Bodenstation zu übertragen.

13. Satellitensystem nach einem der vorstehenden Ansprüche,
dadurch gekennzeichnet, daß dem von der SAR-Antenne eines Radar-Satelliten empfangenen SAR-Rohdatenstromes Hilfsdaten wie Pulswiederholfrequenz, Orbithöhe, Blickwinkel, Empfangszeit, Pulsmodulationsdaten etc. von der SAR-Elektronik im Radar-Satelliten blockweise in verschlüsselter Form hinzugefügt werden.

14. Satellitensystem nach den Ansprüchen 12 oder 13, wobei die SAR-Sen
deimpulse und die Echoimpulse mittels Pulskompression verarbeitet werden, dadurch gekennzeichnet, daß die bei der Erzeugung der SAR-Sendeimpulse stattfindende Pulsexpansion mittels einer Phasenkodierung erfolgt, und daß der SAR-Prozessor in der Bodenstation diese Phasenkodierung zur Erzeugung des SAR-Bildes kennt.

15. Satellitensystem nach einem der vorstehenden Ansprüche,
dadurch gekennzeichnet, daß die SAR-Antenne eines Kleinsatelliten die in dem Speicher gespeicherten SAR-Daten zur Bodenstation überträgt.

16. Satellitensystem nach einem der vorstehenden Ansprüche,
dadurch gekennzeichnet, daß die SAR-Antenne sowohl für die Bildaufnahme als auch für die Übertragung der Bilddaten zur Bodenstation benutzt wird.

17. Satellitensystem nach den Ansprüchen 15 und 16,
dadurch gekennzeichnet, daß das Lageregelungssystem des Satelliten die SAR-Antenne während der Übertragung der Bilddaten auf die Bodenantenne der Bodenstation ausrichtet.

18. Satellitensystem nach einem der vorstehenden Ansprüche,
dadurch gekennzeichnet, daß jeder Radar-Satellit über ein Orbitkontrollsystem (OCS) mit Schubdüsen, Treibstofftanks und zugehöriger Ansteuerelektronik verfügt, um den Radar-Satelliten während seiner Lebensdauer in einem tolerierbaren Höhenbereich zu halten.

19. Satellitensystem nach einem der vorstehenden Ansprüche,
dadurch gekennzeichnet, daß durch Hinzufügung einer zusätzlichen Bodenstation das Satellitensystem die Bildlieferzeit verringert, und die Bildkapazität erhöht wird.
